# EUROPEAN PATENT SPECIFICATION

(11) **EP 3 688 237 B1**
(45) Date of publication and mention of the grant of the patent: **18.12.2024**
(21) Application number: 18863498.4
(22) Date of filing: 25.09.2018
(51) Int. Cl.: E03B 3/24, E03B 3/12, E03B 3/18, E03B 3/26, E21B 43/08, E03B 9/20, E21B 43/04, E03B 9/04, E03C 1/05, E03B 7/07, E21B 43/10

(54) **WELL AND METHOD FOR CONSTRUCTING A WELL**
BRUNNEN UND VERFAHREN ZUR HERSTELLUNG EINES BRUNNENS
PUITS ET PROCÉDÉ DE CONSTRUCTION D'UN PUITS

(30) Priority: 26.09.2017 SE 1751195
(43) Date of publication of application: 05.08.2020
(73) Proprietor: Good Sweden AB, 423 72 Säve (SE)
(72) Inventor: WESTERLIND, Martin, 444 95 Ödsmål (SE); ALLÉN, Staffan, 423 72 Säve (SE)
(74) Representative: Westpatent AB
(86) International application number: PCT/SE2018/050972
(87) International publication number: WO 2019/066703

(56) References cited:
- EP-A1- 2 343 416
- AT-B- 213 793
- CA-A- 973 088
- DE-A1- 2 835 250
- DE-A1- 4 407 383
- FI-B- 75 632
- FR-A- 855 335
- GB-A- 828 417
- KR-A- 20030 074 070
- KR-B1- 100 719 749
- US-A- 1 291 915
- US-A- 1 291 915
- US-A- 178 400
- US-A- 5 099 917
- US-A- 5 901 789
- US-A1- 2016 033 462
- US-B1- 9 689 235

## Description

### TECHNICAL FIELD

The present invention relates to a well foundation, a well and a method for constructing a well. The invention also relates to a kit for assembling a well and a system of wells using modular units.

### BACKGROUND OF THE INVENTION

The availability of fresh water is essential to societies all over the world. In cities and larger communities the fresh water supply is in general provided for from some open water supply which is purified in a large scale fresh water treatment plant in order to distribute fresh water to the citizens via a piping system. In smaller communities, or for single houses out in the countryside, the fresh water supply is in general provided for by ground water. Earlier, these wells were in general constructed by digging a hole in the ground until the ground water level was reached and water could be supplied by a well. Today, the wells are in general made by deep-boring in order to supply water from a greater depth. By pumping water from a greater depth there is generally a more reliable supply of water and in general less bacterial matters or pollutants originating from manure spread on the earth or polluted rain falling down onto the ground and thus in these aspects healthier for the users.

Even though there are certain advantages by deep boring a well, such a construction is in general associated with higher costs than if the well is made by simply digging a hole in the ground. Further advantages is that there is less energy needed in order to pump the water since it need not to be elevated as much if the well is located closer to the surface. Other kind of pollutants harmful to human beings or animals than the one described above may be more frequently occurring in a deep bored well, e.g. heavy metals or radioactive matters such as radon. In general it is also easier to construe a larger water reservoir, and thus an increased capacity, in a well which is dug and having a more shallow water reservoir than in a well which is deep bored. Hence, there may be advantages and disadvantages by using either method. An example of a bored well is disclosed in US 1,291,915 and a dug well is described in US 9,689,235.

US 9,689,235 B1 discloses a well structure for providing drinking water. The well structure includes slotted horizontal collectors connected laterally to a fitting connector. A well casing is connected to a top of the fitting connector. The fitting connector is positioned in a bottom of the well bore such that the horizontal collectors are perpendicular to groundwater flow. Crushed stones are deposited in a lower portion of the well bore and allow groundwater to flow down and into the slots of the horizontal collectors. A geotextile filter fabric is placed over the crushed-stone fill. A pump is placed in the well casing to pump the groundwater to the land surface. A loam soil fill is deposited over the geotextile filter fabric. A seal is placed around the well casing under the land surface. A vented, removable cap with a rubber seal is placed over a top of the well casing and secured.

For certain purposes it may be desired or wanted to have several wells spread over a waste area of which all wells need not to be working at the same time.

This may for example be the case when you have animals, e.g. cattle or horses, which are moved between different locations to find a suitable place for graze.

In these instances it may be costly to deep bore wells at each location or provide a net of pipes and conduits in order to provide water at all locations desired. However, there is still a need for a well which may provide drinking water of a reliable quality

The present idea provides for a solution which enables to provide drinkable water at a wide variety of places while also being cost efficient in producing the wells.

### SUMMARY OF THE INVENTION

An object of the invention is to provide a well which may be easily constructed and assembled. In particular it is intended that the well may be constructed and used periodically, e.g. for cattle during gaze periods, where after the more sophisticated and costly parts of the well, e.g. pumping equipment, control electronics, power generating means and/or water purification/diagnostic devices, may be removed and used in another well at a different site when there is no desire to use a well. The well foundation or basic construction, including for example underground piping and a coarse material bed, e.g. a bed of gravel stones or macadam, may be left at the location such that the well may be easily arranged to function again when desired.

The well is suitably used at remote locations where there is no other access to water or at least no water which is suitable to be used for drinking and/or watering. In such places, there is in general no access to a power supply grid why it is in general needed to provide a power generating device connected to the well, e.g. a solar cell system or wind turbine. It may also be desired to include a power accumulator in order to conserve electrical power to be used when needed, i.e. when there is a need to pump water by an electrical pump. Alternatively, there may be a reservoir for water where to water is pumped when power is available, e.g. to fill up the reservoir during daytime when solar panels generate power. Another suitable use for this kind of well could be as a water reserve at remote places to be used in case of fires by the fire brigade.

Hence, the well comprises a foundation construction. The foundation construction is located in a hole in the ground. In general is the hole made by digging a rather shallow hole having essentially the same width or cross sectional area all along its length or having a somewhat decreasing cross sectional area from the top at the ground level to the bottom of the hole such that the construction material for building up the foundation may be easily lowered into the hole. The foundation construction is not necessarily completely located in the ground but may include some features also over ground. The foundation construction is located in the ground such that it reaches a water supply source, in general meaning the hole is made such that it reaches the ground water. Even though the hole may be made in other ways it is thought that the hole may be easily made by digging. In cases where the ground water level not is shallow may it be hard to dig sufficiently deep in order to reach ground water or water supply for the well and other alternatives such as boring could be a better alternative. However, the general idea is to find a location where you may dig a hole sufficiently deep to reach the ground water level. The hole may for example be around 3-5 meters deep having a circumference of 2-4 metres even though it may be shallower, deeper, larger or smaller depending on the surrounding circumstances. The depth of the well is of course highly dependent on the ground water level when the ground water is the water supply to fill up the water reservoir in the well.

The foundation construction of the well further comprises a coarse material bed provided in the hole. The coarse materiel is filled into the hole and is generally filled up to between 1/3 and 2/3 of the volume or height of the hole. The coarse material bed may for example be made of or comprise gravel stones, macadam or even larger stone pieces. It is of course not necessary that the coarse material is made of stone but it could also be made of other material, e.g. polymers or being a mixture of stones and polymers. The size of the coarse particles may differ from case to case and is not essential for the function of the invention to work, at least as long as the coarse particles are large enough to not enter into the pipe system. Asa general rule, the size of the particles should at least be 5 mm long and in general is larger particles desired, e.g. from 1 cm and above.

The foundation construction of the well also comprises a filtering material located between the coarse material bed and the walls of the well. The filtering material is suitably made of one or several pieces of cloth located between the coarse material and the walls of the hole. The filter cloth could for example be in the shape of a bag which is placed in the hole before the coarse material is filled into the hole and thus forming a cloth material surface adjacent to both the bottom and walls of the hole. The cloth is intended to function as a filter for keeping particles, e.g. mud, out of the well. From this perspective, the size of the openings or pores in the cloth should be small enough to avoid dirt and particles to enter the well while being large enough to allow a flow of water into the well from the surroundings. In general, the filtering material, i.e. the filter cloth, is located also on top of the coarse material bed. By filter cloth is herein meant a flexible sheet material which may be comprised of one or several portions of clothes.

The foundation construction of the well also comprises a base pipe located in the hole and supported by the coarse material bed. The base pipe is forming part of a pipe system enclosing equipment such as pump, hoses and filter for providing drinking water from the underground water reservoir when the well is functioning. The base pipe is thus lowered into the hole such that it reaches below the water level in the well and preferably essentially all the way to the bottom of the hole in order to be able to pump the water available in the well. The lowermost part of the base pipe is preferably designed as a through flow cylindrical plate, or cylindrical filter unit, in order to allow water to enter into the pipe while also preventing particles to enter into the pipe system. The base pipe is essentially located underground even though it may have a portion which reaches above ground level if desired.

The foundation construction is thus designed to be a ground water reservoir for fresh water. The coarse material bed creates a space between the coarse particles allowing water to enter into the void between them. The larger the coarse particles are the more water may be stored in the well. Hence, crushed stones having a length of 5 to 10 cm or even larger could work very well as the coarse material. Since there is a coarse material put into the hole forming the well, the space or volume for storage of water in the hole dug will be less than the volume of the hole made but in general the volume free for water will be at least 30 percent of the total volume where the coarse material is located, in general at least 40 percent. The well comprises further features when functioning and it comprises at least a pump and water conduit for pumping water from the water supply source through the pipe. The pump may for example be a submersible pump which is inserted into the base pipe and lowered to the bottom of the base pipe. It could of course also be possible to have a pump unit located above ground.

The well is thus intended to be a modular system having one module which is stationary and firmly attached to the hole and the ground as described above, the so called foundation construction including the base pipe, and a second, mobile module including a pump which may be removed from the foundation construction, a so called extension pipe. The extension pipe is releasably attached to the base pipe. This feature enables to have a multitude of foundation constructions of wells which need not to be completely equipped when not in use. This has the benefit of easily moving the extension pipe and its content from one well to another while avoiding the cost of completely equipping a multitude of wells. Another benefit is that the tear of more fragile units may be reduced since these features may be easily removed, e.g. a pump, electronics, communication modules, accumulator and power generating units. When referring to a mobile unit, e.g. the extension pipe, it is meant that they may easily be removed and thereafter attached to the well again. This is for example not easily made for the base pipe or cloth; if the cloth is removed, it may not be reintroduced adjacent the walls or the base pipe may not be lowered in the hole again since the coarse material bed will be occupying the space where the base pipe unit was located. In general, we are referring to "a mobile module" when describing detachable units. It shall be understood that units described as being parts of the mobile unit need not to be firmly attached to constitute one single integrated mobile module but the mobile module may comprise one or more entities which may be more or less firmly attached or connected to each other.

The foundation construction or stationary unit of the well is constructed such that the filter cloth is also covering the upper side of the coarse material bed. There is still some space left in the uppermost part of the hole, above the coarse particle bed and filter cloth, whereby the space on top of the filtering material, i.e. the filter cloth, may be covered with a fine material bed, e.g. sand. The fine material bed will thus function as a filter for surface water sinking through the upper layer and further down to the water reservoir. The fine material bed may also be enclosed, either completely or partly, by a cloth material as described for the coarse material.

In one embodiment is the filter cloth in the shape of a large bag which is filled with the coarse material bed. The opening, or upper part of the sack, is closed and tightened around the base pipe such that the complete coarse material bed is encapsulated by the cloth material.

In order to avoid water slipping through the ground and passing by the fine material bed close to the base pipe, the pipe could be provided with a surface water protection guard. The surface water protection guard could for example be a disc, or a truncated cone, attached to the pipe close to the ground level.

By this arrangement, no surface water will be allowed to follow the outside of the base pipe unit directly from the surface down to the water reservoir but will be forced away from the base pipe unit and travel through the fine particle bed to be filtered.

The mobile module may comprise an extension pipe forming part of the pipe. The extension pipe is essentially the portion of the pipe system located above ground. The extension pipe is in this case releasably connected to the base pipe. This extension pipe could be more or less firmly connected to the pump. Even though it is generally meant by extension pipe the mobile portion of the pipe system above ground could a part (or all) of the pipe portion above ground form part of the foundation construction.

In general the extension pipe is forming the main portion of the pipe system above ground level and function in order to provide inspection and/or maintaining openings for access to the interior of the pipe as well as being a support for additional units which may be used in the well. The well may be provided with a multitude of different devices in order to improve the functionality and/or the utility of the well in a wide variety of aspects which will be further described below.

The well may include measuring devices for measuring the water level and/or amount of water in the well. This may of course be of interest for the local user of the well but if there are a multitude of wells distributed over an area or region it may also be used for collecting data concerning water availability and changes of ground water levels in different areas and used for prediction of water needs for different purposes.

The well may also comprise water purification equipment. This could for example be a filter unit in the base pipe, e.g. at the inlet to the pipe from the water reservoir a filter in the pump unit or in the water conduit from the pump.

Still another feature which may be added to the well is water analysing equipment. In particular in agricultural areas may there be a problem with to high levels of nitrite or nitrate. The water analysing equipment may be designed to alarm when detecting too high levels of these components (or other components) and also stop pumping water when the water quality is below drinkable standard.

The well may also comprise a power generator, such as solar panels or a wind power unit, for power supply of the well. The power supply generator is preferably connected to an accumulator such that power may be stored and used when needed.

A certain field of use for the well may be to function as fresh water source for animals out in the field. In order to function in a sanitary way and deliver fresh drinking water for animals could the well comprise a drinking tray designed to be able to tilt in order to be emptied. By emptying the tray it may be avoided that water in the tray will be polluted, in particular a problem in warmer regions, or the water may freeze which may occur in colder places.

The well may also be provided with motion detectors which in particular may be useful when used for providing drinking water to animals. When a movement is detected close to the well, the pump starts to deliver water, e.g. to a drinking tray. The pump may for example work continuously until the motion detector not recognize any motion within a certain time period. As another example, the pump may work to keep a certain level of water in a tray until the motion detector not registers any motion within a certain time period. If no motion is detected for a while, the pump may be turned off or the tray could be emptied, in case such an arrangement is included.

Since the well is suitable for being constructed in remote places it is suitable to include some wireless communicating interface for receiving and/or sending information. Relevant information to be sent to the well could be control signals to activate the pump, e.g. to fill up a reservoir or to water an area. Relevant information to be sent from the well could be water capacity, water quality and working status/failure messages.

The well may further comprise a back flushing mechanism. The back flushing mechanism may be a pressure chamber. The pressure chamber is loaded by pumping water into the chamber, e.g. at the end of a pumping cycle, and thus pressurize the gas (air) comprised in the chamber and keep the chamber at an elevated pressure, e.g. at 3 bar, while the pump starts to work for pumping water from the well. After a while, either a predetermined time or when a working cycle is ended and there is no scheduled further working cycle for the pump within a time limit, back flushing will start by opening the pressure chamber. In a preferred embodiment is the back flush conduit designed such that the water is back flushing the filters in the fresh water conduit and discarding the back flushing water above ground such that impurities are removed from the well.

The well could further be provided with fire hydrant pipe having a connector adapted to fit fire brigade equipment. In general will this fire hydrant pipe be quite a lot wider in dimensions than the water conduit connected to the pump for pumping water under normal circumstances. Since there may be a problem in keeping the fire hydrant pipe filled up with water, e.g. due to freezing risk, could the fire hydrant pipe be connected to the pump in order to prefill the fire hydrant pipe on demand when there is a need to use the fire hydrant pipe.

The invention further relates to a method for constructing a well. The method comprises the steps of
- making a hole in the ground to find a water supply source, in general is this method step made by digging a hole in the ground until the ground water is reached, generally at a depth of 3-6.
- When the hole is made, the construction of the well may proceed by a next step which is providing a cloth material to be placed in the hole. The cloth material could suitably be a sack shaped to fit in the hole so as to cover the walls and the bottom of the hole. The cloth material will function as a filter and stabilizing unit between the walls of the well and the interior of the hole
- In order to provide for a water pumping system is it also needed to place a base pipe in the hole and lowering it essentially all the way down to the bottom of the well. The base pipe could be placed where desired in the well but is conveniently placed in the middle of the hole. However, even if decentralized the base pipe will be surrounded by the cloth material.
- After the cloth and the base pipe has been placed in the hole will the filling up of the hole with the coarse material, e.g. gravel stones, macadam or the like material, start in order to create a reservoir space while also providing a support for the base pipe and keeping the filter material steady at the edges of the well. The filling up of the coarse material may for example be about 1/3 to 2/3 of the depth of the hole even though the exact amount of filling up with coarse material not is essential

After the coarse material has been filled up a portion of cloth material is laid on top of the coarse material bed in order to essentially enclose the coarse material bed in the cloth material. On top of the coarse material bed and the cloth material fine particles, e.g. sand, are filled up to level the ground plane.

According to one aspect of the method it may include the feature of using a sack as the cloth material. The upper portion of the sack may be used to be laid on top on top of the coarse material and tightened against the base pipe so as to entirely enclosing the coarse material bed.

### DRAWINGS

The description will now be described in detail with reference to the accompanying drawings, wherein:
Fig. 1 is a cross sectional side view of a well and its foundation construction according to an embodiment of the invention;
Fig. 2 is a cross sectional side view of a well comprising a foundation construction as disclosed in figure 1 and an extension pipe above ground according to an embodiment of the invention; and
Fig. 3 is a schematic view of the interior of the base pipe in the foundation construction of the invention; and
Fig. 4 is a schematic view of the interior of a first extension pipe section; and
Fig. 5 is a schematic view of the interior of a second extension pipe section; and
Fig. 6 is a schematic view of the water pumping system and back flushing device in the base pipe.

### DETAILED DESCRIPTION OF THE INVENTION

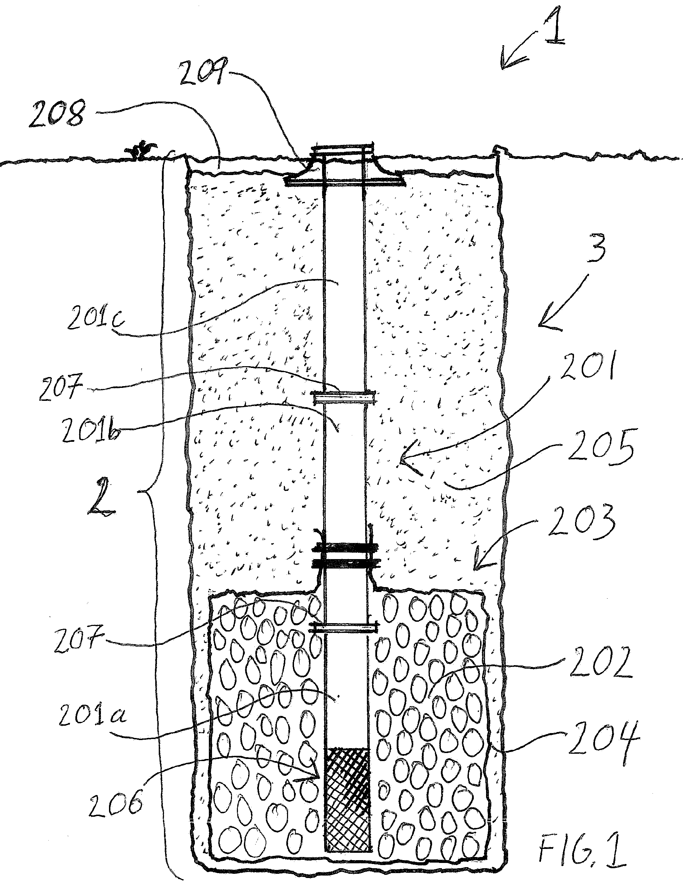

In figure 1 is disclosed a well 1 according to an embodiment of the invention. The well comprises a foundation construction 2 comprised in a hole 3.

The foundation construction 2 comprises a base pipe 201. The base pipe is in this embodiment built up by a first base pipe section 201a closest to the bottom of the hole 3, a second base pipe section 201b in the middle and a third base pipe section 201c closest to the surface. The base pipe sections 201a, b, c are designed to fit in with each other and are joined by section connecting flanges 207. The first base pipe section 201a includes a mesh or filter 206 in its lowermost part which serves as inlet for water into the base pipe 201 from the well 1. The mesh 206 serves as filter in order to avoid large particles to enter into the base pipe 201. The foundation construction 2 further comprises a water reservoir 203 which is made by enclosing a coarse material bed 202 in a cloth material 204. The coarse material bed 202 may be made by macadam, gravel stones or other stone material having a desired shape and size and the cloth material 204 may be a woven or non-woven fabric made from natural or synthetic material having a porosity allowing water to enter through the cloth material 204 while avoiding particles to enter through the cloth material 204. The cloth material 204 is in this case designed as a bag having an essentially cubic shape. Above the water reservoir 203 is a fine material bed 205 which for example may be made of sand. The particle size of the fine material bed 205 should be adapted to the structure of the cloth material 204 such that the fine material not may enter through it. On top of the fine material bed 205 is a hardened surface layer 208 which for example could be a layer of the material which is used in the coarse material bed. The hardened surface layer could of course be made of other material, e.g. a wooden structure or concrete. At the top of the base pipe 201 is a surface water protection guard 209 located which has the purpose of preventing surface water from being transported in the fine material bed 205 in close proximity to the base pipe 201 from the ground level to the water reservoir 203. The reason for this arrangement is to prevent surface water from not being readily filtrated in the fine material bed 205 since there is a risk for a build-up of voids and channels around the base pipe 201.

The above design of the foundation construction only serves as an example of how a foundation according to the invention may be designed. The foundation construction would for example work also without a surface protection guard 209 or a hardened surface depending on the use of the well 1. Likewise, it is not necessary to have a mesh or filter 206 on the envelope surface of the base pipe 206 but it could be just an ordinary hole at the end of the base pipe.

Furthermore, in this case is the base pipe 201 built up by three base pipe sections 201 a, b, c joined by flanges 207 but it could as well also be made as a one piece pipe unit. The use of several sections is mainly made for a more convenient transport of the parts before building up the foundation construction.

It could even be the case that the fine material bed 205 not is necessary in all cases. For example, the complete hole 3 could be filled up with the coarse material bed forming the coarse material bed 202 surrounding the base pipe 201 all the way.

The foundation construction 2, which also could be called the ground module or stationary module, is intended to be the stationary base or stationary module of the well. The base pipe 201 will function as an access tunnel from the ground surface to the water reservoir 203 wherein functional equipment may be inserted in order to make the well function. Hence, the base pipe 201 itself is not intended to be used as a water conduit but as a framework or shell for equipment for pumping water to the surface, e.g. by having a pump connected to a water conduit located inside the base pipe. There may of course be further devices located inside the base pipe such as water analysing equipment, valves, screens or filters, smaller pipes or water level measuring devices which will be further described in the following drawings.

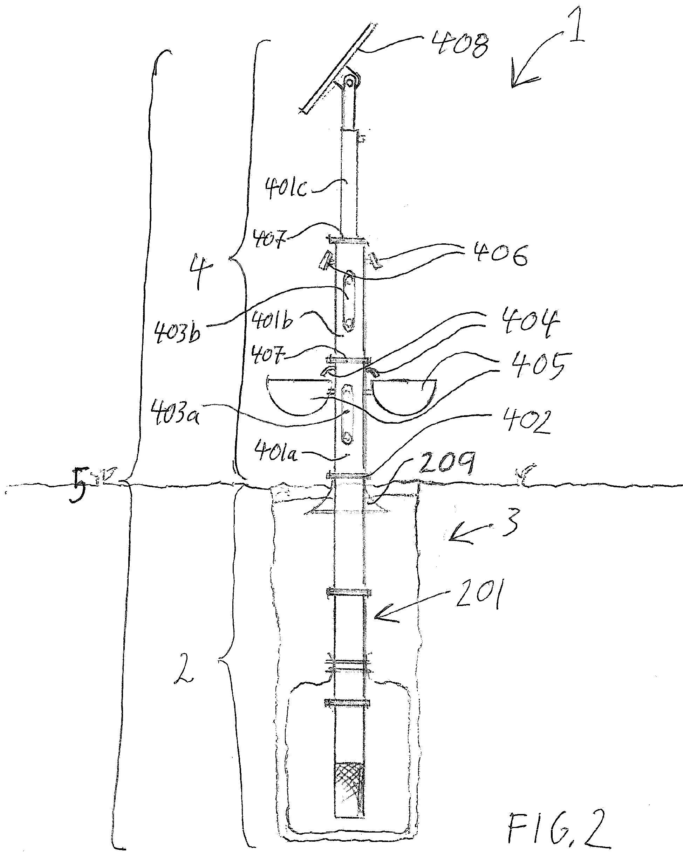

In figure 2 is a view of the well 1 disclosing an add-on module 4 including an extension pipe 401 attached to the foundation structure 2 disclosed in figure 1. Since the foundation structure is the same as in figure 1, the details of the foundation structure 2 will not be explained in detail in this figure.

The extension pipe 4 comprises a first extension pipe section 401a closest to the ground, a second extension pipe section 401b located in the middle and a third extension pipe section 401c on the top. The extension pipe sections are connected to each other by connecting flanges 407. The extension pipe 4 is connected to the base pipe 201 by a foundation connecting flange 402 so as to form a pipe system 5. Close to the foundation connecting flange 402 is the water protection guard 209 attached to the pipe system 5. The foundation connecting flange 402 could be designed such that it may adjust the angle between the base pipe 201 and the extension pipe 401 in order to adjust the extension pipe 401 to be straight and vertical even though if the base pipe 401 not is vertically standing in the hole 3.

The first extension pipe section 401a comprises a first access opening 403a. The first access opening 403a could suitably be used for introducing equipment such as water conduits, pumps and other devices which are desired to introduce into the base pipe 201. The first extension pipe section 401a is further provided with water outlets 404 in order to provide water from the well 1. Each of the water outlets 404 is located above a separate tray 405 also attached to the first extension pipe 401a. Close to the trays 405 are motion detectors 406 installed on the second extension pipe section 401b in order to detect if there are any objects, e.g. a horse or a cow, moving close to any of the water trays 405. The extension pipe 4 is further provided with solar cell panels 408 in order to provide power to power consuming devices, e.g. a pump, power outlet, motion detectors or connectors for an electric fence.

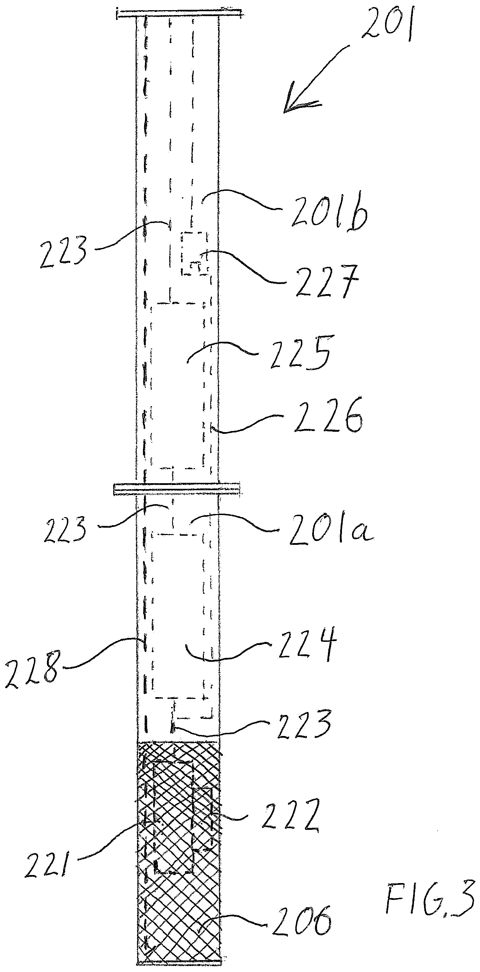

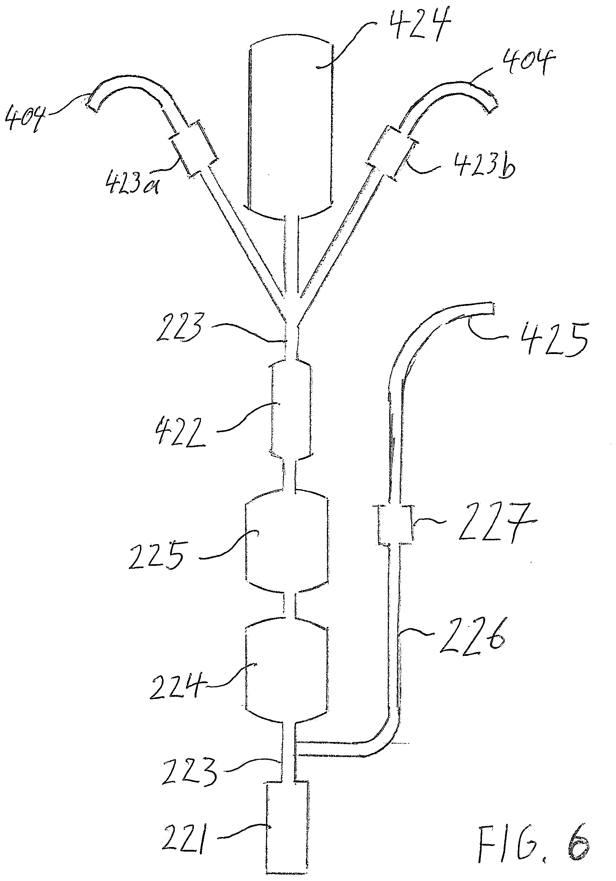

In figure 3 is disclosed a schematic view of the inside of the base pipe 201 according to an embodiment of the invention disclosing the interior of the first base pipe section 201a and the second base pipe section 201b. In the lower portion of the first base pipe section 201a is a pump 221 located. The pump 221 is located in the portion of the base pipe 201 where water enters into the base pipe 201 through the mesh 206 and is thus intended to be a submersible pump located below the water surface when working. Adjacent the pump is a float 222 located which may be used for detecting when the water level reaches a level when the pump 221 not should be turned off. The float 222 may be designed such that it automatically turns of the pump 221 when the water level is below a certain threshold in order to avoid damage to the pump. The pump 221 is connected to a drinking water conduit 223 in order to pump water from the water reservoir (not shown, see figure 1) to the water outlets in the extension pipe (not shown, see figure 2). The drinking water conduit 223 comprises a first filter or purification unit 224 closest to the pump 221 and a second filter or purification unit 225 located downstream of the first purification unit 225. These purification units may have different purification functions, e.g. may one of them be a particle filter while the other one being a trap for undesired chemical compounds. The drinking water conduit 223 is further connected to a bypass conduit 226 which main function is to be used for back flushing the drinking water conduit 223 and the first and second purification units 224, 225. The bypass conduit 226 is therefore located in the drinking water conduit 223 between the outlet from the pump 221 and the first purification unit 224. The bypass conduit 226 also comprises a bypass conduit valve 227 such that the bypass conduit 226 is closed for through flow during normal operation when the pump 221 is working for providing fresh water to the drinking water outlets in the extension pipe (not shown). The system with the drinking water conduit 223 and the bypass conduit and how the back flushing function is intended to work is described more in detail in figure 6.

In addition to the drinking water conduit 223 and the bypass conduit 226 could the base pipe 221 be equipped with a further, separate auxiliary conduit 228. This auxiliary conduit 228 could for example be adapted to fit fire brigade connections such that the well easily could be used as fire hydrant if desired and/or be used for measuring the water level in the well.

The embodiment according to figure 3 is only intended to serve as an example of how the pumping system may work and all these feature may not be necessary in order to make the well work. In a very simplistic embodiment may it be possible to only have a pipe or a hose running through the base pipe 201 and use a pump located above ground.

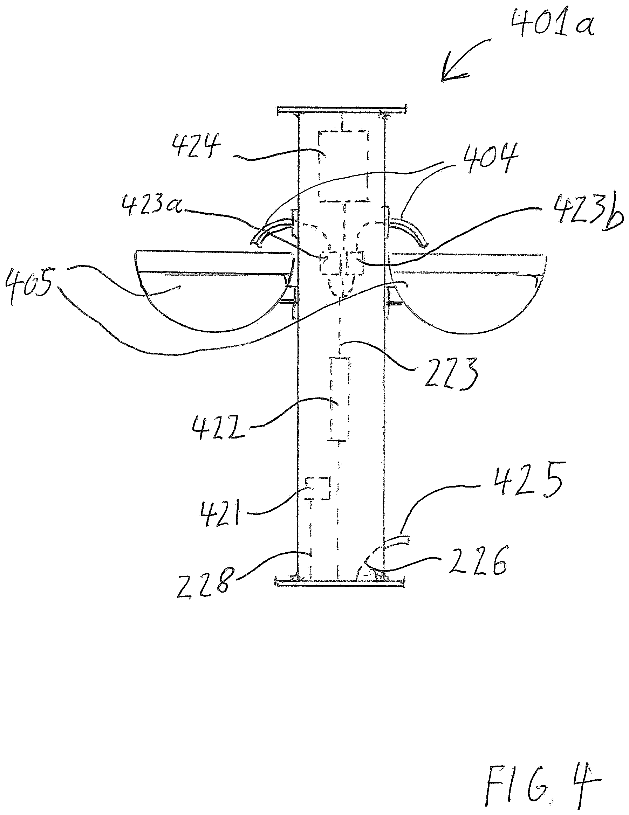

In figure 4 is disclosed a cross sectional view of the first extension pipe section 401a disclosing a schematic view of details inside the first extension pipe section 401a. This pipe section includes in its interior a water level detector 421, e.g. an ultrasonic detector, which is connected to the auxiliary conduit 228.

In the drinking water conduit 223, there is a water analyser 422 in order to verify the quality of the drinking water. The drinking water conduit 223 is further connected to a pair of drinking water outlets 404 whereof each one of the drinking water outlets is filling water to separate trays 405. Each one of the outlets have been provided with separate drinking water outlet valves 423a, 423b in order to control the water flow through the drinking water outlets 404 such that the filling of each tray 405 may be controlled. The drinking water conduit 223 is also connected to a container 424. The container 424 comprises gas (air) and is in general kept at normal atmospheric pressure when the pump system is working. However, when a back flushing operation is desired is the pressure in the container elevated and it may be used for back flushing the drinking water conduit. Further details concerning the back flushing operation is described in figure 6.

It is also disclosed in figure 4 that the bypass conduit 226 is connected to a back flush water outlet 425. The back flush water outlet 425 is located above ground, and not inside the well 1, in order to get rid of impurities to the outside to the ground. Some impurities will be purified by being subject to sunshine, e.g. biological matter, while other impurities will be purified by the filtration process when the water travels through the ground back to the well.

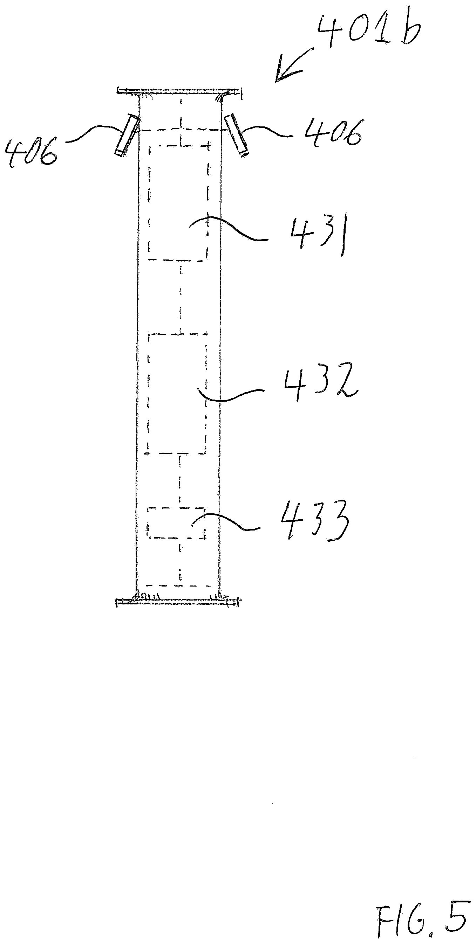

In figure 5 is disclosed a cross sectional view of the second extension pipe section 401b disclosing a schematic view of details inside the second extension pipe section 401b. The second extension pipe section 401b is dedicated to include electronics and features related to power supply and distribution of power to power consuming elements, e.g. the pump (not shown, see figure 3). In the second extension pipe section 401b is located an accumulator 431 for storage of energy from the solar cell panels (not shown, see figure 2). The accumulator 431 is connected to a Central Processing Unit (CPU) 432 which controls the electronic equipment and electric devices comprised in the system. In this embodiment, there is also included an electronic fence connector 433 such that it will be possible to provide power to an electric fence at remote locations where power usually not is available. There may be further electronic devices included in the second extension pipe section 401b such as communication devices for remote control of the well or for sending information concerning the functionality of the well and/or water levels. The second extension pipe section 401b is further provided with motion detectors 406 in order to detect when there is a movement in the vicinity of the well and the pump may be controlled to by the CPU 432 to automatically start the pump in these occasions.

In figure 6 is disclosed a schematic overview of how the well pumping system including the pump 221, the drinking water conduit 223 and bypass conduit 226 may be designed and fitted into the pipe system 5 (not shown, see figure 2) in order to function and include a back flushing function. The pump 221 is intended to be immersed in the water reservoir (not shown, se figure 1) in order to pump water to the drinking water conduit 223. The drinking water conduit 223 is connected to a bypass conduit 226 which is shut off by closing the bypass conduit valve 227 during normal use and only opened when a back flushing operation is desired. Hence, during normal operation when drinking water is desired is the bypass conduit valve 227 closed while one or both of the drinking water outlet valves 423a, 423b are open. Water is pumped by the pump from the water reservoir to the drinking water conduit and further passing through a first water purification unit 224, a second water purification unit 225 and a water analyser 422 before the water will be flowing from the drinking water conduit 223 through one or both of the drinking water outlets 404 depending on which of the water outlet valves 423a, 423b that are open.

When there is no desire for providing any more drinking water through the drinking water outlets 404 will the water outlet valves 423a, 423b close. The pump 221 may be turned off at the same time thus allowing the water in the drinking water pipe to slowly flow back into the well. Alternatively, a back flushing operation may be performed. In this case will the pump 221 continue to pump water after the water outlet valves 423a, 423b are closed while keeping also the bypass conduit valve closed 227. This action will compress the air in the container to an elevated pressure and pump water into the container 424. After a short while, either by allowing the pump to continue pumping for a specific time or until a threshold pressure is reached in the container, is the pump 221 turned off while the bypass conduit valve 227 is opened. The water in the drinking water conduit 227 will thus be forced by the elevated pressure in the container 424 to flow in the reverse direction compared to when the pump is working for providing fresh water to the drinking water outlet valves 404. The water will thus remove particles and impurities which are attached to the filters/purification units 224,225 and discard the back flushing water and the impurities through the back flush water outlet 425. By having an outlet outside the well will particles trapped in filters be discarded outside the well and thus removed from the well.

The back flush operation may of course be performed several times if desired by simply repeating the operation of the pump 221 while keeping the bypass conduit valve 227 and drinking water outlet valves 423a, 423b closed until there is a desired elevated pressure and water in the container 424 and the pump is turned off and the bypass conduit valve 227 is opened.

The invention is not limited to the embodiments described above, but may be varied within the scope of the appended claims. For example, the above embodiments of the invention are directed to a well where there is no access to the grid or other power source why the well is self-supporting concerning electricity. However, the well also works perfectly well if it is connected to the grid or another electrical power source which also should make the whole arrangement more simplistic.

Concerning the back flushing feature, the water conduits and purification devices or filters could be back flushed by connecting a water pump to the water outlets while keeping the bypass conduit valve open.

The embodiments described above have been mainly directed to provide drinking water for animals. The well could of course also be used for providing drinking water to humans and work as an ordinary well for a house or at a camp site. In that case, a motion detector should not be needed but rather a simple switch for staring and switching off the pump. The well could also be a suitable source of freshwater in places where there are frequent natural disasters, e.g. earthquakes, hurricanes or inundations, since it has a robust construction also enabling to remove all over ground constructions before the natural disaster hits and thereafter once again reattach the over ground structures. In addition, the well may be self-supporting by power which means that it may function even if the electrical grid is non-working

Hence, there are a multitude of ways in which the present invention may be used and how the features may be combined within the scope of the invention defined by the appended claims.

## Claims

1. A well (1) comprising a foundation construction (2), the well being made by digging a hole in the ground and said foundation construction (2) being located in the hole (3) in the ground reaching a water supply source wherein said foundation construction (2) comprises
- a base pipe (201) located in the hole
- a coarse material bed (202), e.g. made of gravel stones or macadam, provided in the hole (3) surrounding and supporting the base pipe (201) and creating a water reservoir (203) in the space between the coarse material forming the coarse material bed
- a filter cloth (204) located between the coarse material bed (202) and walls of the hole (3) in order to restrict entry of particles into the water reservoir (203), said well (1) further designed such that the filter cloth (204) is also covering the upper side of the coarse material bed (202) whereby the space on top of the cloth (204) is covered with a fine material bed (205), e.g. sand.

2. A well (1) according to claim 1 **characterized in that** said filter cloth (204) is shaped as a bag having its bottom located against the bottom of the hole (3) and its opening facing upwards and being closed and constricted around the base pipe (201).

3. A well (1) according to claim 1 or 2 **characterized in that** said base pipe (201) is provided with a surface water protection guard (209) close to the ground level.

4. A well (1) according to any previous claim **characterized in that** the well comprises an extension pipe (4) attached to the upper end of the base pipe (2) forming a pipe system (5) together with the base pipe (2), said extension pipe (4) being releasably connected to the base pipe (2).

5. A well (1) according to claim 4 **characterized in that** said extension pipe (4) has an attached pump (221) for pumping water from the water reservoir (203) to a water outlet (404) above ground via a drinking water conduit (223) located in the pipe system (5).

6. A well (1) according to any previous claim **characterized in that** the well comprises equipment for measuring the water level/amount of water in the well for analysing the water quality and/or for water purification.

7. A well (1) according to any previous claim **characterized in that** the well comprises a power generator such as solar panels or wind power plant for power supply of the well and an accumulator for storing energy.

8. A well (1) according to any previous claim **characterized in that** the well comprises a CPU for control of electronic equipment associated with the well such as motion detectors, wireless communicating interface for receiving and/or sending information or control of a tiltable tray for drinking water for animals in order to be emptied.

9. A well (1) according to any previous claim **characterized in that** the well comprises a back flushing mechanism for cleaning of a water purification equipment and designed to let the water out on the ground.

10. A well (1) according to any previous claim **characterized in that** the well is provided with a fire hydrant pipe having a connector adapted to fit fire brigade equipment, said fire hydrant pipe being connected to the pipe in order to evacuate and fill the fire hydrant pipe on demand.

11. A method for constructing a well (1) comprising the steps of:
- Digging a hole (3) in the ground until the ground water is reached
- Providing a cloth (204) material, e.g. a sack, to be placed in the hole (3) and function as a filtering material
- placing a base pipe (201) in the hole (3) to be surrounded by the cloth (204) material
- filling up the hole (3) with coarse bed material, e.g. gravel stones, macadam or the like material in order to create a coarse material bed (202) to support the base pipe (201) and create a water reservoir (203)
- placing a portion of the cloth (204) material, e.g. an upper portion of a sack, on top of the coarse material bed (202) in order to enclose the coarse material bed (202) in the cloth (204) material, and
- filling fine particles, e.g. sand, to form a fine material bed (205) on top of the cloth (204) material to level the ground plane.

## Patentansprüche

1. Brunnen (1), umfassend eine Fundamentskonstruktion (2), wobei der Brunnen durch Graben eines Lochs in den Boden hergestellt wird und sich die Fundamentskonstruktion (2) in dem Loch (3) in dem Boden befindet, wobei eine Wasserversorgungsquelle erreicht wird, wobei
die Fundamentskonstruktion (2) umfasst
- ein Basisrohr (201), das sich in dem Loch befindet
- ein Bett (202) aus grobem Material, z. B. hergestellt aus Kiessteinen oder Makadam, das in dem Loch (3) bereitgestellt ist, das das Basisrohr (201) umgibt und stützt und wobei ein Wasserreservoir (203) in dem Raum zwischen dem groben Material geschaffen wird, das das Bett aus grobem Material ausbildet
- ein Filtertuch (204), das sich zwischen dem Bett (202) aus grobem Material und den Wänden des Lochs (3) befindet, um das Eindringen von Partikeln in das Wasserreservoir (203) zu verhindern, wobei der Brunnen (1) ferner derart ausgelegt ist, dass das Filtertuch (204) auch die Oberseite des Betts aus grobem Material (202) bedeckt, wodurch der Raum über dem Tuch (204) mit einem Bett (205) aus feinem Material, z. B. Sand, bedeckt wird.

2. Brunnen (1) nach Anspruch 1, **dadurch gekennzeichnet, dass** das Filtertuch (204) die Form eines Beutels aufweist, dessen Unterseite sich an dem Boden der Öffnung (3) anliegend befindet und dessen Öffnung nach oben zeigt, und das um das Basisrohr (201) herum geschlossen und verengt ist.

3. Brunnen (1) nach Anspruch 1 oder 2, **dadurch gekennzeichnet, dass** das Basisrohr (201) mit einem Oberflächenwasserschutz (209) in Bodennähe versehen ist.

4. Brunnen (1) nach einem der vorstehenden Ansprüche,
**dadurch gekennzeichnet, dass** der Brunnen ein Verlängerungsrohr (4), das an dem oberen Ende des Basisrohrs (2) angebracht ist, das zusammen mit dem Basisrohr (2) ein Rohrsystem (5) ausbildet, umfasst, wobei das Verlängerungsrohr (4) an das Basisrohr (2) lösbar angeschlossen ist.

5. Brunnen (1) nach Anspruch 4, **dadurch gekennzeichnet, dass** an dem Verlängerungsrohr (4) eine Pumpe (221) angebracht ist, zum Pumpen von Wasser aus dem Wasserreservoir (203) zu einem oberirdischen Wasserauslass (404) über eine Trinkwasserleitung (223), die sich in dem Rohrsystem (5) befindet.

6. Brunnen (1) nach einem der vorstehenden Ansprüche,
**dadurch gekennzeichnet, dass** der Brunnen eine Ausrüstung zum Messen des Wasserstandes/der Wassermenge in dem Brunnen, zum Analysieren der Wasserqualität und/oder zum Wasseraufbereiten umfasst.

7. Brunnen (1) nach einem der vorstehenden Ansprüche,
**dadurch gekennzeichnet, dass** der Brunnen einen Leistungsgenerator wie Solarpaneele oder eine Windkraftanlage für die Leistungsversorgung des Brunnens und einen Akkumulator zum Speichern von Energie umfasst.

8. Brunnen (1) nach einem der vorstehenden Ansprüche,
**dadurch gekennzeichnet, dass** der Brunnen eine CPU für die Steuerung von elektronischer Ausrüstung, die dem Brunnen zugeordnet ist, wie Bewegungsmelder, eine drahtlose Kommunikationsschnittstelle zum Empfangen und/oder Senden von Informationen oder Steuern einer kippbaren Schale für Trinkwasser für Tiere, damit es entleert werden kann, umfasst.

9. Brunnen (1) nach einem der vorstehenden Ansprüche,
**dadurch gekennzeichnet, dass** der Brunnen einen Rückspülmechanismus zum Reinigen von Wasseraufbereitungsausrüstung umfasst und dafür ausgelegt ist, das Wasser auf den Boden abzulassen.

10. Brunnen (1) nach einem der vorstehenden Ansprüche
**dadurch gekennzeichnet, dass** der Brunnen mit einem Hydrantenrohr versehen ist, das einen für die Montage von Feuerwehrausrüstung geeigneten Anschluss aufweist, wobei das Hydrantenrohr an das Rohr angeschlossen ist, um das Hydrantenrohr bei Bedarf zu entleeren und zu füllen.

11. Verfahren zum Bauen eines Brunnens (1), umfassend die Schritte die Schritte:
- Graben eines Lochs (3) in den Boden, bis das Grundwasser erreicht wird
- Bereitstellen eines Materials aus Tuch (204), z. B. eines Sacks, der in das Loch (3) zu platzieren ist und als Filtermaterial fungiert
- Platzieren eines Basisrohrs (201) in dem Loch (3), das mit dem Material aus Tuch (204) umgeben ist
- Auffüllen des Lochs (3) mit grobem Bettmaterial, z. B. Kies, Steinen, Makadam oder ähnlichem Material, um ein Bett aus grobem Material (202) zu schaffen, das das Basisrohr (201) stützt, und ein Wasserreservoir (203) zu erschaffen
- Platzieren eines Abschnitts des Materials aus Tuch (204), z. B. eines oberen Abschnitts eines Sacks, auf dem Bett (202) aus grobem Material, um das Bett (202) aus grobem Material in dem Material aus Tuch (204) einzuschließen, und
- Auffüllen von feinen Partikeln, z. B. Sand, um ein Bett (205) aus feinem Material auf dem Material aus Tuch (204) auszubilden, um die Grundebene zu auszugleichen.

## Revendications

1. Puits (1) comprenant une construction de fondation (2), le puits étant réalisé en creusant un trou dans le sol et ladite construction de fondation (2) étant située dans le trou (3) dans le sol atteignant une source d'approvisionnement en eau, dans lequel
ladite construction de fondation (2) comprend
- un tuyau de base (201) situé dans le trou
- un lit de matériaux grossiers (202), par exemple constitué de gravier ou de macadam, placé dans le trou (3), entourant et soutenant le tuyau de base (201) et créant un réservoir d'eau (203) dans l'espace entre les matériaux grossiers formant le lit de matériaux grossiers
- un tissu filtrant (204) situé entre le lit de matériaux grossiers (202) et les parois du trou (3) afin de limiter l'entrée de particules dans le réservoir d'eau (203), ledit puits (1) étant en outre conçu de manière à ce que le tissu filtrant (204) recouvre également la face supérieure du lit de matériaux grossiers (202), moyennant quoi l'espace situé au-dessus du tissu (204) est recouvert d'un lit de matériaux fins (205), par exemple du sable.

2. Puits (1) selon la revendication 1, **caractérisé en ce que** ledit tissu filtrant (204) a la forme d'un sac dont le fond est situé contre le fond du trou (3) et dont l'ouverture est orientée vers le haut et est fermée et resserrée autour du tuyau de base (201).

3. Puits (1) selon la revendication 1 ou 2, **caractérisé en ce que** ledit tuyau de base (201) est pourvu d'une protection contre les eaux de surface (209) à proximité du niveau du sol.

4. Puits (1) selon l'une quelconque revendication précédente,
**caractérisé en ce que** le puits comprend un tuyau d'extension (4) fixé à l'extrémité supérieure du tuyau de base (2) formant un système de tuyaux (5) avec le tuyau de base (2), ledit tuyau d'extension (4) étant raccordé de manière amovible au tuyau de base (2).

5. Puits (1) selon la revendication 4, **caractérisé en ce que** ledit tuyau d'extension (4) a une pompe attachée (221) pour pomper l'eau du réservoir d'eau (203) vers une sortie d'eau (404) en surface par l'intermédiaire d'un conduit d'eau potable (223) situé dans le système de tuyaux (5).

6. Puits (1) selon l'une quelconque revendication précédente,
**caractérisé en ce que** le puits comprend un équipement pour mesurer le niveau d'eau/la quantité d'eau dans le puits, pour analyser la qualité d'eau et/ou pour la purification de l'eau.

7. Puits (1) selon l'une quelconque revendication précédente,
**caractérisé en ce que** le puits comprend un générateur d'énergie tel que des panneaux solaires ou une centrale éolienne pour l'alimentation du puits et un accumulateur pour le stockage d'énergie.

8. Puits (1) selon l'une quelconque revendication précédente,
**caractérisé en ce que** le puits comprend une unité centrale pour la commande d'un équipement électronique associé au puits, tel que des détecteurs de mouvement, une interface de communication sans fil pour la réception et/ou l'envoi d'informations ou la commande d'un plateau inclinable pour l'abreuvement des animaux en vue de sa vidange.

9. Puits (1) selon l'une quelconque revendication précédente,
**caractérisé en ce que** le puits comprend un mécanisme de rétro-rinçage pour le nettoyage d'un équipement de purification de l'eau et conçu pour laisser l'eau s'écouler sur le sol.

10. Puits (1) selon l'une quelconque revendication précédente,
**caractérisé en ce que** le puits est pourvu d'un tuyau de borne d'incendie ayant un raccord adapté à l'équipement des pompiers, ledit tuyau de borne d'incendie étant raccordé au tuyau afin d'évacuer et de remplir le tuyau de borne d'incendie sur demande.

11. Procédé de construction d'un puits (1) comprenant les étapes consistant à :
- creuser un trou (3) dans le sol jusqu'à ce que l'eau souterraine soit atteinte ;
- fournir un matériau en tissu (204), par exemple un sac, à placer dans le trou (3) et à utiliser comme matériau filtrant
- placer un tuyau de base (201) dans le trou (3) pour l'entourer du matériau en tissu (204)
- remplir le trou (3) avec des matériau de lit grossier, par exemple du gravier, du macadam ou un matériau similaire afin de créer un lit de matériaux grossiers (202) pour soutenir le tuyau de base (201) et créer un réservoir d'eau (203)
- placer une partie du matériau en tissu (204), par exemple une partie supérieure d'un sac, au-dessus du lit de matériaux grossiers (202) afin d'enfermer le lit de matériaux grossiers (202) dans le matériau en tissu (204), et
- remplir de particules fines, par exemple du sable, pour former un lit de matériaux fins (205) au-dessus du tissu (204) afin de niveler le plan du sol.
